# FASCICULE DE BREVET EUROPEEN

(11) **EP 3 483 058 B1**
(45) Date de publication et mention de la délivrance du brevet: **18.03.2020**
(21) Numéro de dépôt: 18200078.6
(22) Date de dépôt: 12.10.2018
(51) Int. Cl.: B64C 1/18, B64D 11/06

(54) **PROCEDE DE FABRICATION D'UN RAIL DE PLANCHER D'AERONEF OBTENU PAR UN ASSEMBLAGE PAR SERTISSAGE DE DEUX PARTIES, RAIL DE PLANCHER D'AERONEF AINSI OBTENU**
HERSTELLUNGSVERFAHREN EINER BODENSCHIENE EINES LUFTFAHRZEUGS, DIE DURCH EINEN ZUSAMMENBAU DURCH CRIMPEN VON ZWEI TEILEN ERHALTEN WIRD, SOWIE DADURCH ERHALTENE BODENSCHIENE EINES LUFTFAHRZEUGS
METHOD FOR MANUFACTURING AN AIRCRAFT FLOOR RAIL OBTAINED BY A TWO-PART CRIMPED ASSEMBLY, AIRCRAFT FLOOR RAIL THUS OBTAINED

(30) Priorité: 08.11.2017 FR 1760466
(43) Date de publication de la demande: 15.05.2019
(73) Titulaire: Airbus Operations S.A.S., 31060 Toulouse (FR)
(72) Inventeur: MIALHE, Christophe, 81370 SAINT SULPICE (FR); MAURAN, Guy, 31770 COLOMIERS (FR)
(74) Mandataire: Sarraméa, Claude

(56) Documents cités:
- EP-A1- 1 544 105
- WO-A1-2010/097221
- DE-A1-102004 026 228
- FR-A1- 2 864 940
- US-A1- 2005 133 666

## Description

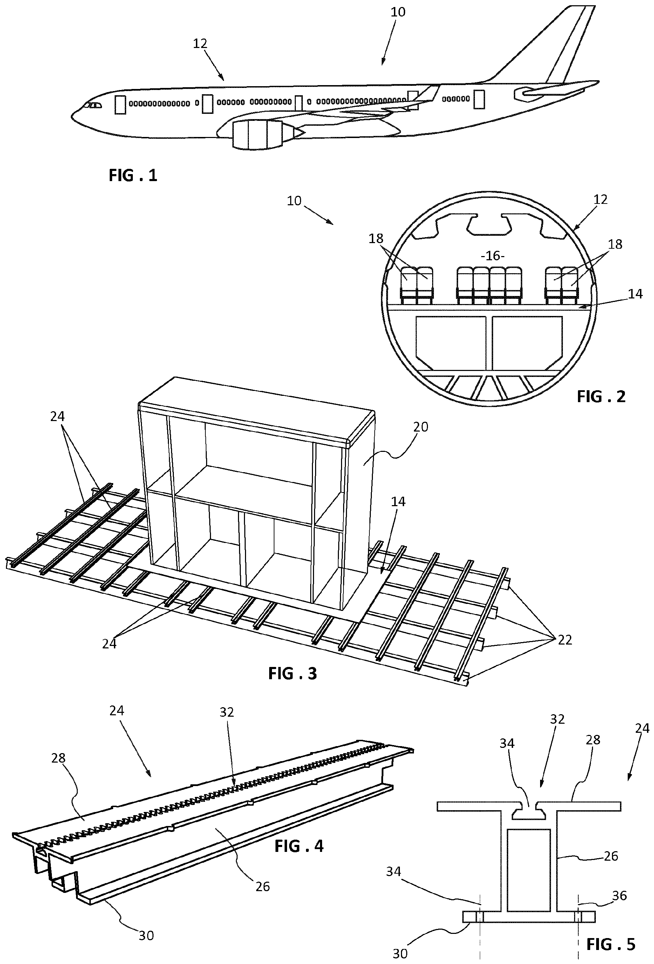

La présente demande se rapporte à un procédé de fabrication d'un rail obtenu par un assemblage par sertissage de deux parties ainsi qu'à un rail de plancher d'aéronef ainsi obtenu. Comme illustré sur les figures 1 à 3, un aéronef 10 comprend un fuselage 12 dans lequel est positionné un plancher 14 délimitant avec le fuselage 12 une cabine de passagers 16 dans laquelle sont positionnés des éléments tels que des sièges 18, des meubles 20 ou autres.

Ces éléments 18, 20 sont fixés au plancher 14 de manière démontable.

A cet effet, le plancher 14 comprend des traverses 22 et des rails 24 (ou des faux rails) auxquels sont reliés les éléments 18, 20 positionnés dans la cabine de passagers 16 grâce à des systèmes de fixation.

Selon un mode de réalisation illustré sur les figures 4 et 5, un rail 24 de plancher d'aéronef a la forme d'un profilé avec une section en I.

Le rail 24 est réalisé d'un seul tenant et comprend une âme 26, une première semelle 28 à une première extrémité de l'âme 26 et une deuxième semelle 30 à une deuxième extrémité de l'âme 26.

La première semelle 28, orientée vers le haut lorsque le rail 24 est monté, comprend une rainure 32 avec une embouchure 34 rétrécie permettant de fixer les éléments 18, 20 positionnés dans la cabine de passagers 16.

La deuxième semelle 30 est fixée par des fixations 36 au reste du plancher 14.

Selon un premier mode de réalisation, les rails 24 sont réalisés en alliage d'aluminium. Ce premier mode de réalisation a pour avantage de réduire la masse embarquée.

En service, les rails 24 en alliage d'aluminium peuvent se corroder en raison notamment de la stagnation de liquide dans la rainure 32. Lors des visites de maintenance, le remplacement des rails 24 de plancher endommagés par la corrosion est une tâche longue et coûteuse qui augmente le temps d'immobilisation de l'aéronef et impacte les coûts de maintenance. Selon un deuxième mode de réalisation, les rails situés dans les zones dites humides sont réalisés en un matériau résistant à la corrosion tel qu'en alliage de titane.

Cependant, les matériaux résistants à la corrosion sont généralement plus onéreux et ont une masse volumique plus élevée ce qui tend à augmenter la masse embarquée.

Le document FR2864940A1 décrit un procédé de fabrication d'un rail de plancher d'aéronef dans lequel deux parties du rail sont assemblées par rivetage.

Le document EP1544105A1 décrit un rail de siège d'aéronef comprenant deux parties soudées entre elles : une partie inférieure de support en alliage d'aluminium ou de magnésium et un profilé supérieur en alliage de titane.

La présente invention vise à remédier aux inconvénients de l'art antérieur.

A cet effet, l'invention a pour objet un procédé de fabrication d'un rail de plancher d'aéronef, ledit rail de plancher comprenant au moins une âme, une première semelle présentant un système de fixation et une deuxième semelle reliée à la première semelle par la ou les âme(s), caractérisé en ce que le procédé comprend une étape de fabrication, de manière dissociée, d'une première partie du rail de plancher, comportant au moins la première semelle, en un premier matériau résistant à la corrosion et d'une deuxième partie du rail de plancher, comportant au moins la deuxième semelle, en un deuxième matériau ayant une masse volumique différente, en particulier inférieure, à celle du premier matériau, et une étape d'assemblage par sertissage des première et deuxième parties du rail de plancher.

Cette solution permet d'optimiser les rails de plancher en les renforçant seulement où cela est nécessaire, ce qui permet de limiter l'augmentation de la masse embarquée.

Selon une autre caractéristique, une interface configurée pour limiter des frottements entre les première et deuxième parties et/ou des phénomènes de corrosion est positionnée entre les première et deuxième parties du rail de plancher.

L'invention a également pour objet un rail de plancher d'aéronef comprenant au moins une âme, une première semelle présentant un système de fixation et une deuxième semelle reliée à la première semelle par la ou les âme(s), caractérisé en ce que le rail de plancher comprend :
- une première partie, comportant au moins la première semelle, en un premier matériau résistant à la corrosion,
- une deuxième partie, comportant au moins la deuxième semelle, en un deuxième matériau ayant une masse volumique différente, en particulier inférieure, à celle du premier matériau, et
- au moins une jonction par sertissage reliant les première et deuxième parties.

Selon une autre caractéristique, chaque jonction de sertissage comprend au moins une interface, positionnée entre les première et deuxième parties, configurée pour limiter les frottements entre les première et deuxième parties et/ou des phénomènes de corrosion. Selon un mode de réalisation, l'interface comprend un revêtement appliqué sur au moins une surface de contact d'au moins une des première et deuxième parties en contact avec l'autre des première et deuxième parties.

Selon une autre caractéristique, le rail de plancher comprend un plan d'une fibre neutre et la jonction par sertissage est positionnée au niveau ou très proche du plan de la fibre neutre du rail de plancher.

Selon un premier mode de réalisation, chaque jonction par sertissage comprend un renflement, solidaire de la deuxième partie ou respectivement de la première partie, et une forme femelle, solidaire de la première partie ou respectivement de la deuxième partie, configurée pour loger le renflement et pour l'immobiliser, après déformation de la forme femelle autour du renflement.

La forme femelle est une rainure en U qui présente deux branches et une base, les branches étant espacées, avant déformation, d'une distance suffisante pour permettre de loger le renflement, les branches ayant une longueur suffisante pour que leurs extrémités soient recourbées et emprisonnent, après déformation, le renflement.

La forme femelle en U est reliée à la première partie.

Selon un deuxième mode de réalisation, chaque jonction par sertissage comprend un premier renflement solidaire de la première partie, un deuxième renflement solidaire de la deuxième partie et au moins une pièce complémentaire configurée pour maintenir les premier et deuxième renflements plaqués l'un contre l'autre.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une section transversale d'un fuselage d'aéronef,
- La figure 3 est un schéma qui illustre un meuble positionné sur un plancher d'une cabine d'un aéronef,
- La figure 4 est une vue en perspective d'un rail de plancher d'aéronef qui illustre un mode de réalisation de l'art antérieur,
- La figure 5 est une section transversale du rail visible sur la figure 4,
- La figure 6 est une vue en perspective d'un rail de plancher d'aéronef qui illustre un mode de réalisation de l'invention,
- La figure 7 est une section transversale du rail visible sur la figure 6,
- La figure 8A est une vue en perspective d'une première partie du rail visible sur la figure 6,
- La figure 8B est une section de la première partie de rail visible sur la figure 8A,
- La figure 9A est une vue en perspective d'une deuxième partie du rail visible sur la figure 6,
- La figure 9B est une section de la deuxième partie de rail visible sur la figure 9A,
- Les figures 10A à 10C sont des sections d'une première partie de rail qui illustrent différents modes de réalisation de l'invention,
- La figure 11 est une section d'un rail d'un plancher d'aéronef qui illustre un autre mode de réalisation de l'invention,
- La figure 12 est une section qui illustre en détail une zone de jonction du rail visible sur la figure 11,
- La figure 13 est une coupe de deux éléments d'un aéronef assemblés par sertissage qui illustre une autre application de l'invention, et
- La figure 14 est une coupe de deux éléments d'un aéronef assemblés par sertissage qui illustre une autre application de l'invention.

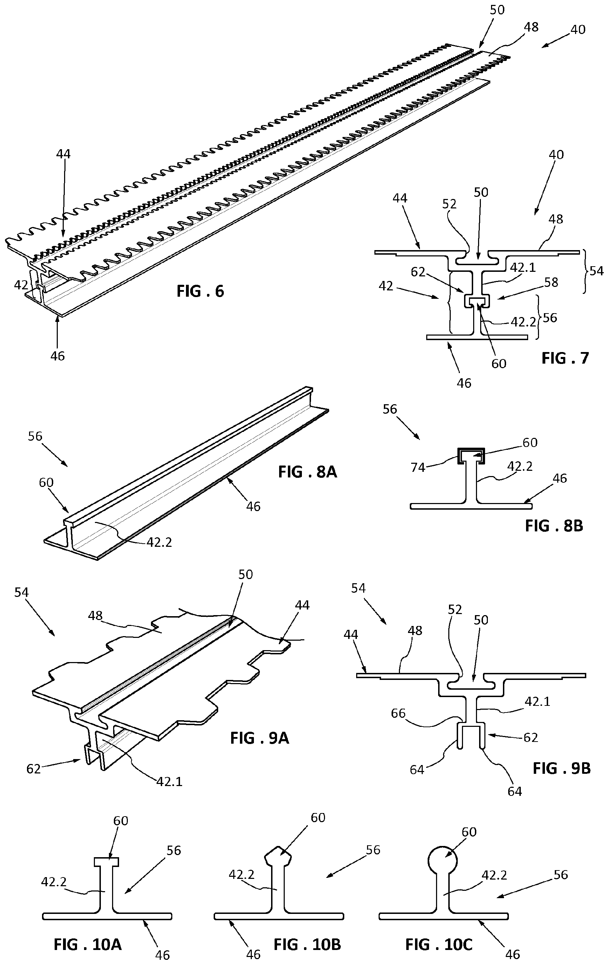

Sur les figures 6, 7 et 11, on a représenté en 40 un rail de plancher d'aéronef.

Pour la présente demande, un rail de plancher correspond à un rail de plancher ou à un faux rail de plancher.

Selon un mode de réalisation, le rail de plancher 40 a une section en I et comprend au moins une âme 42, une première semelle 44 à une première extrémité de l'âme 42 et une deuxième semelle 46 à une deuxième extrémité de l'âme 42.

La première semelle 44 comprend une première surface 48, opposée à l'âme 42 et orientée vers le haut lorsque le rail de plancher 40 est monté, qui présente une rainure 50 avec une embouchure rétrécie 52.

La deuxième semelle 46 comprend des orifices pour la fixer à une structure porteuse d'un aéronef par l'intermédiaire de fixations.

Les formes de la première semelle 44, de la deuxième semelle 46 et de la rainure 50, les fixations, la structure porteuse ne sont pas plus décrites car elles peuvent être identiques à celles de l'art antérieur.

Selon l'invention, le rail de plancher 40 comprend une première partie 54 qui comporte au moins la première semelle 44, une deuxième partie 56 qui comporte au moins la deuxième semelle 46 et au moins une jonction par sertissage 58 reliant les première et deuxième parties 54, 56.

Selon une caractéristique de l'invention, la première partie 54 est réalisée en un premier matériau et la deuxième partie 56 est réalisée en un deuxième matériau différent du premier matériau, présentant une masse volumique différente de celle du premier matériau. Les premier et deuxième matériaux sont choisis en fonction des contraintes imposées aux première et deuxième parties 54, 56.

Ainsi, dans le cas d'un rail de plancher 40 situé dans une zone humide, la première partie 54 est réalisée en un premier matériau résistant à la corrosion, comme par exemple en titane, et la deuxième partie 56 est réalisée en un matériau ayant une masse volumique limitée, comme par exemple en alliage d'aluminium.

Selon l'invention, le procédé de fabrication d'un rail de plancher 40 d'aéronef comprend une étape de fabrication, de manière dissociée, des première et deuxième parties 54, 56 ainsi qu'une étape d'assemblage par sertissage des première et deuxième parties 54, 56. L'invention permet d'obtenir un rail de plancher 40 optimisé, bi-matériau, la première partie 54 du rail de plancher 40 soumise aux risques de corrosion étant réalisée en un matériau résistant à la corrosion, la deuxième partie 56 non soumise aux risques de corrosion étant en un matériau présentant une masse volumique inférieure à celle du matériau utilisé pour la première partie 54.

Selon un autre avantage procuré par l'assemblage par sertissage, il est possible de fabriquer les première et deuxième parties 54, 56 selon des techniques de fabrication différentes adaptées en fonction des propriétés recherchées pour chacune des première et deuxième parties 54, 56.

Selon un autre avantage, le procédé d'assemblage par sertissage est un procédé d'assemblage mécanique rapide et facilement automatisable qui ne nécessite pas de contrôle qualité particulier, à l'inverse d'autres technologies d'assemblage comme le soudage.

Selon un mode de réalisation, la première partie 54 comprend la première semelle 44 et une première portion 42.1 de l'âme 42 et la deuxième partie 56 comprend la deuxième semelle 46 et une deuxième portion 42.2 de l'âme 42. Selon ce mode de réalisation, les première et deuxième parties 54 et 56 ont une forme en T.

Selon des modes de réalisation visibles sur les figures 6, 7, 8A, 8B, 9A, 9B, 10A à 10C, la jonction par sertissage 58 comprend un renflement 60, solidaire de la deuxième partie 56 (ou respectivement de la première partie 54), et une forme femelle 62, comme une rainure, solidaire de la première partie 54 (ou respectivement de la deuxième partie 56) configurée pour loger le renflement 60 et pour l'immobiliser après déformation de la forme femelle 62 autour du renflement 60. Ainsi, après l'opération de sertissage, les première et deuxième parties 54, 56 sont immobilisées l'une par rapport à l'autre.

Le renflement 60 peut avoir différentes sections.

Selon un mode de réalisation visible sur les figures 8B et 10A, la forme mâle 60 a une section carrée ou rectangulaire.

Selon un mode de réalisation visible sur la figure 10B, la forme mâle 60 a une section en losange.

Selon un mode de réalisation visible sur la figure 10C, la forme mâle 60 a une section ronde, ovoïde ou oblongue.

Bien entendu, l'invention n'est pas limitée à ces sections.

Selon un mode de réalisation visible sur la figure 9B, la forme femelle 62 a une rainure en U qui présente deux branches 64 et une base 66 reliée au reste de la première partie 54. Les branches 64 sont espacées, avant déformation, d'une distance suffisante pour permettre de loger le renflement 60. Les branches 64 ont une longueur suffisante pour que leurs extrémités soient recourbées et emprisonnent, après déformation, le renflement 60.

Cette forme femelle 62 en U, solidaire de la première partie 54, qui enveloppe le renflement 60 solidaire de la deuxième partie 56 contribue à protéger la deuxième partie 56 contre la corrosion.

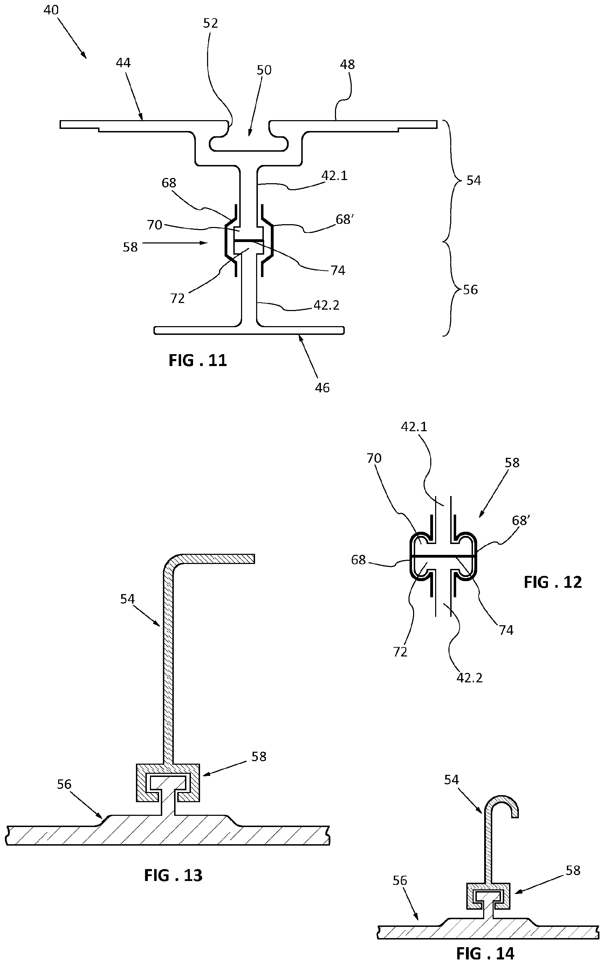

Selon un autre mode de réalisation visible sur les figures 11 et 12, la jonction par sertissage 58 comprend au moins une pièce complémentaire 68, 68' pour relier les première et deuxième parties 54, 56.

Selon ce mode de réalisation, la jonction par sertissage 58 comprend un premier renflement 70 solidaire de la première partie 54, un deuxième renflement 72 solidaire de la deuxième partie 56 et au moins une pièce complémentaire 68, 68' configurée pour maintenir les premier et deuxième renflements 70, 72 plaqués l'un contre l'autre.

Selon une autre caractéristique, la jonction par sertissage 58 est positionnée au niveau ou très proche du plan de la fibre neutre du rail de plancher 40 pour minimiser les efforts sur la jonction par sertissage 58.

Selon une autre caractéristique, la jonction par sertissage 58 comprend au moins une interface 74, positionnée entre les première et deuxième parties 54 et 56, configurée pour limiter les frottements entre les première et deuxième parties 54 et 56 et/ou les phénomènes de corrosion galvanique.

Selon un mode de réalisation, l'interface 74 comprend un revêtement sur au moins une des première et deuxième parties 54, 56. Ce revêtement est appliqué sur au moins la surface de contact d'au moins une des première et deuxième parties en contact avec l'autre partie.

A titre d'exemple, l'interface 74 est en polyéthylène.

Bien que décrite appliquée à un rail de plancher 40 d'aéronef mono-âme, l'invention n'est aucunement limitée à cette application. Ainsi, l'invention peut s'appliquer :
- à un rail de plancher 40 multi-âmes, chaque âme comprenant une jonction par sertissage 58,
- à un rail de plancher 40 ayant une section en oméga ou toute autre forme de section,
- à un rail de plancher 40 présentant, à la place de la rainure 50, un autre système de fixation, comme par exemple une nervure en saillie par rapport à la première surface 48 de la première semelle 44.

Plus généralement, l'invention peut être utilisée pour assembler deux éléments d'un aéronef, comme par exemple un profilé 54 et un support 56.

Ainsi, selon une application illustrée par la figure 13, le profilé 54 est un cadre d'une structure d'un fuselage d'un aéronef assemblé par sertissage et le support 56 est une peau du fuselage de l'aéronef, le cadre étant assemblé à la peau par une jonction par sertissage 58.

Selon une autre application illustrée par la figure 14, le profilé 54 est une lisse d'une structure d'un fuselage d'un aéronef et le support 56 est une peau du fuselage de l'aéronef.

Quelle que soit l'application, le profilé est un élément longiligne qui présente une longueur nettement supérieure aux autres dimensions de sa section qui est approximativement constante. Le profilé peut être sensiblement rectiligne dans le cas d'un rail ou d'une lisse et être courbe dans le cas d'un cadre.

Quelle que soit l'application, la jonction par sertissage entre le profilé 54 et le support 56 est positionnée au niveau ou très proche du plan de la fibre neutre de l'ensemble formé par le profilé 54 et le support 56 pour minimiser les efforts sur la jonction par sertissage 58.

De plus, le profilé 54 et le support 56 sont réalisés en des premier et deuxième matériaux différents, choisis en fonction des contraintes imposées au profilé 54 et au support 56. Ainsi, les premier et deuxième matériaux peuvent avoir des propriétés privilégiant par exemple une bonne tenue en traction pour le premier matériau, une bonne tenue en compression pour le deuxième matériau, ou une bonne tenue en fatigue pour le premier matériau et une bonne tenue en statique pour le deuxième matériau, ou toute autre combinaison de propriétés.

## Revendications

1. Procédé de fabrication d'un rail de plancher (40) d'aéronef, ledit rail de plancher (40) comprenant au moins une âme (42), une première semelle (44) présentant un système de fixation (50) et une deuxième semelle (46) reliée à la première semelle (44) par la ou les âme(s) (42), le rail de plancher comprenant un plan d'une fibre neutre, **caractérisé en ce que** le procédé comprend une étape de fabrication, de manière dissociée, d'une première partie (54) du rail de plancher (40), comportant au moins la première semelle (44), en un premier matériau résistant à la corrosion et d'une deuxième partie (56) du rail de plancher (40), comportant au moins la deuxième semelle (46), en un deuxième matériau ayant une masse volumique différente, en particulier inférieure, à celle du premier matériau, et une étape d'assemblage par sertissage des première et deuxième parties (54, 56) du rail de plancher (40) de manière à obtenir une jonction par sertissage (58) positionnée au niveau ou très proche du plan de la fibre neutre du rail de plancher (40).

2. Procédé de fabrication d'un rail de plancher (40) d'aéronef selon la revendication 1, **caractérisé en ce qu'**une interface (74), configurée pour limiter des frottements entre les première et deuxième parties (54, 56) et/ou des phénomènes de corrosion, est positionnée entre les première et deuxième parties (54, 56) du rail de plancher (40).

3. Rail de plancher d'aéronef comprenant au moins une âme (42), une première semelle (44) présentant un système de fixation (50) et une deuxième semelle (46) reliée à la première semelle (44) par la ou les âme(s) (42), le rail de plancher comprenant un plan d'une fibre neutre, **caractérisé en ce que** le rail de plancher (40) comprend :
- une première partie (54), comportant au moins la première semelle (44), en un premier matériau résistant à la corrosion,
- une deuxième partie (56), comportant au moins la deuxième semelle (46), en un deuxième matériau ayant une masse volumique différente, en particulier inférieure, à celle du premier matériau, et
- au moins une jonction par sertissage (58) reliant les première et deuxième parties (54, 56) positionnée au niveau ou très proche du plan de la fibre neutre du rail de plancher (40).

4. Rail de plancher selon la revendication 3, **caractérisé en ce que** chaque jonction de sertissage (58) comprend au moins une interface (74), positionnée entre les première et deuxième parties (54, 56), configurée pour limiter les frottements entre les première et deuxième parties (54, 56) et/ou des phénomènes de corrosion.

5. Rail de plancher selon la revendication précédente, **caractérisé en ce que** l'interface (74) comprend un revêtement appliqué sur au moins une surface de contact d'au moins une des première et deuxième parties (54, 56) en contact avec l'autre des première et deuxième parties (54, 56).

6. Rail de plancher selon l'une des revendications 3 à 5, **caractérisé en ce que** chaque jonction par sertissage (58) comprend un renflement (60), solidaire de la deuxième partie (56) ou respectivement de la première partie (54), et une forme femelle (62), solidaire de la première partie (54) ou respectivement de la deuxième partie (56), configurée pour loger le renflement (60) et pour l'immobiliser, après déformation de la forme femelle (62) autour du renflement (60).

7. Rail de plancher selon la revendication précédente, **caractérisé en ce que** la forme femelle (62) est une rainure en U qui présente deux branches (64) et une base (66), les branches (64) étant espacées, avant déformation, d'une distance suffisante pour permettre de loger le renflement (60), les branches (64) ayant une longueur suffisante pour que leurs extrémités soient recourbées et emprisonnent, après déformation, le renflement (60).

8. Rail de plancher selon la revendication précédente, **caractérisé en ce que** la forme femelle (62) en U est reliée à la première partie (54).

9. Rail de plancher selon l'une des revendications 3 à 5, **caractérisé en ce que** chaque jonction par sertissage (58) comprend un premier renflement (70) solidaire de la première partie (54), un deuxième renflement (72) solidaire de la deuxième partie (56) et au moins une pièce complémentaire (68, 68') configurée pour maintenir les premier et deuxième renflements (70, 72) plaqués l'un contre l'autre.

## Patentansprüche

1. Verfahren zur Herstellung einer Bodenschiene (40) eines Luftfahrzeugs, wobei die Bodenschiene (40) mindestens einen Steg (42), einen ersten Fuß (44), der ein Befestigungssystem (50) aufweist, und einen zweiten Fuß (46) enthält, der mit dem ersten Fuß (44) durch den oder die Steg(e) (42) verbunden ist, wobei die Bodenschiene eine Ebene einer neutralen Faser enthält, **dadurch gekennzeichnet, dass** das Verfahren einen Schritt der getrennten Herstellung eines mindestens den ersten Fuß (44) aufweisenden ersten Teils (54) der Bodenschiene (40) aus einem ersten korrosionsfesten Material und eines mindestens den zweiten Fuß (46) aufweisenden zweiten Teils (56) der Bodenschiene (40) aus einem zweiten Material, das eine andere, insbesondere geringere Massendichte als diejenige des ersten Materials hat, und einen Schritt des Zusammenbaus durch Crimpen des ersten und des zweiten Teils (54, 56) der Bodenschiene (40) enthält, um eine Crimpverbindung (58) zu erhalten, die im Bereich von oder sehr nahe der Ebene der neutralen Faser der Bodenschiene (40) positioniert ist.

2. Herstellungsverfahren einer Bodenschiene (40) eines Luftfahrzeugs nach Anspruch 1, **dadurch gekennzeichnet, dass** eine Grenzfläche (74), die konfiguriert ist, Reibungen zwischen den ersten und zweiten Teilen (54, 56) und/oder Korrosionserscheinungen zu begrenzen, zwischen dem ersten und dem zweiten Teil (54, 56) der Bodenschiene (40) positioniert ist.

3. Bodenschiene eines Luftfahrzeugs, die mindestens einen Steg (42), einen ersten Fuß (44), der ein Befestigungssystem (50) aufweist, und einen zweiten Fuß (46) enthält, der mit der ersten Fuß (44) durch den oder die Steg(e) (42) verbunden ist, wobei die Bodenschiene eine Ebene einer neutralen Faser enthält, **dadurch gekennzeichnet, dass** die Bodenschiene (40) enthält:
- einen mindestens den ersten Fuß (44) aufweisenden ersten Teil (54) aus einem ersten korrosionsfesten Material,
- einen mindestens den zweiten Fuß (46) aufweisenden zweiten Teil (56) aus einem zweiten Material, das eine andere, insbesondere geringere, Massendichte hat als diejenige des ersten Materials, und
- mindestens eine die ersten und zweiten Teile (54, 56) verbindende Crimpverbindung (58), die im Bereich oder sehr nahe der Ebene der neutralen Faser der Bodenschiene (40) positioniert ist.

4. Bodenschiene nach Anspruch 3, **dadurch gekennzeichnet, dass** jede Crimpverbindung (58) mindestens eine zwischen den ersten und zweiten Teilen (54, 56) positionierte Grenzfläche (74) enthält, die konfiguriert ist, die Reibungen zwischen den ersten und zweiten Teilen (54, 56) und/oder Korrosionserscheinungen zu begrenzen.

5. Bodenschiene nach dem vorhergehenden Anspruch, **dadurch gekennzeichnet, dass** die Grenzfläche (74) eine Beschichtung enthält, die auf mindestens eine Kontaktfläche mindestens eines der ersten und zweiten Teile (54, 56) in Kontakt mit dem anderen der ersten und zweiten Teile (54, 56) aufgebracht wird.

6. Bodenschiene nach einem der Ansprüche 3 bis 5, **dadurch gekennzeichnet, dass** jede Crimpverbindung (58) eine fest mit dem zweiten Teil (56) bzw. fest mit dem ersten Teil (54) verbundene Verdickung (60) und eine fest mit dem ersten Teil (54) bzw. fest mit dem zweiten Teil (56) verbundene Aufnahmeform (62) enthält, die konfiguriert ist, die Verdickung (60) aufzunehmen und sie nach der Verformung der Aufnahmeform (62) um die Verdickung (60) herum zu blockieren.

7. Bodenschiene nach dem vorhergehenden Anspruch, **dadurch gekennzeichnet, dass** die Aufnahmeform (62) eine U-förmige Rille ist, die zwei Schenkel (64) und eine Basis (66) aufweist, wobei die Schenkel (64) vor der Verformung einen ausreichenden Abstand zueinander haben, um die Unterbringung der Verdickung (60) zu erlauben, wobei die Schenkel (64) eine ausreichende Länge haben, damit ihre Enden umgebogen werden und nach der Verformung die Verdickung (60) umklammern.

8. Bodenschiene nach dem vorhergehenden Anspruch, **dadurch gekennzeichnet, dass** die U-förmige Aufnahmeform (62) mit dem ersten Teil (54) verbunden ist.

9. Bodenschiene nach einem der Ansprüche 3 bis 5, **dadurch gekennzeichnet, dass** jede Crimpverbindung (58) eine erste fest mit dem ersten Teil (54) verbundene Verdickung (70), eine zweite fest mit dem zweiten Teil (56) verbundene Verdickung (72) und mindestens ein komplementäres Bauteil (68, 68') enthält, das konfiguriert ist, die ersten und zweiten Verdickungen (70, 72) gegeneinander gedrückt zu halten.

## Claims

1. Method for manufacturing an aircraft floor rail (40), the said floor rail (40) comprising at least one web (42), a first flange (44) having a fixing system (50) and a second flange (46) connected to the first flange (44) by the web or webs (42), the floor rail comprising a neutral-axis plane, **characterized in that** the method comprises a step of manufacturing, separately, a first part (54) of the floor rail (40), comprising at least the first flange (44), from a corrosion-resistant first material, and a second part (56) of the floor rail (40), comprising at least the second flange (46), from a second material having a density that is different from, in particular lower than, that of the first material, and a step of assembling the first and second parts (54, 56) of the floor rail (40) by crimping so as to obtain a crimped joint (58) positioned at or very close to the plane of the neutral axis of the floor rail (40).

2. Method for manufacturing an aircraft floor rail (40) according to Claim 1, **characterized in that** an interface (74), configured to limit friction between the first and second parts (54, 56) and/or corrosion phenomena, is positioned between the first and second parts (54, 56) of the floor rail (40).

3. Aircraft floor rail, comprising at least one web (42), a first flange (44) having a fixing system (50) and a second flange (46) connected to the first flange (44) by the web or webs (42), the floor rail comprising a neutral-axis plane, **characterized in that** the floor rail (40) comprises:
- a first part (54), comprising at least the first flange (44), made from a corrosion-resistant first material,
- a second part (56), comprising at least the second flange (46), made from a second material having a density that is different from, in particular lower than, that of the first material, and
- at least one crimped joint (58) connecting the first and second parts (54, 56) positioned at or very close to the plane of the neutral axis of the floor rail (40).

4. Floor rail according to Claim 3, **characterized in that** each crimped joint (58) comprises at least one interface (74), positioned between the first and second parts (54, 56), and configured to limit friction between the first and second parts (54, 56) and/or corrosion phenomena.

5. Floor rail according to the preceding claim, **characterized in that** the interface (74) comprises a coating applied to at least one contact surface of at least one of the first and second parts (54, 56) in contact with the other of the first and second parts (54, 56) .

6. Floor rail according to one of Claims 3 to 5, **characterized in that** each crimped joint (58) comprises a bulge (60), secured to the second part (56) or the first part (54), respectively, and a female form (62), secured to the first part (54) or the second part (56), respectively, and configured to house the bulge (60) and to immobilize it, after the female form (62) has been deformed around the bulge (60).

7. Floor rail according to the preceding claim, **characterized in that** the female form (62) is a U-shaped slot which has two branches (64) and a base (66), the branches (64) being spaced apart, prior to deformation, by enough distance to house the bulge (60), the branches (64) being long enough that their ends can be bent over and, after deformation, trap the bulge (60).

8. Floor rail according to the preceding claim, **characterized in that** the U-shaped female form (62) is connected to the first part (54).

9. Floor rail according to one of Claims 3 to 5, **characterized in that** each crimped joint (58) comprises a first bulge (70) secured to the first part (54), a second bulge (72) secured to the second part (56), and at least one complementary component (68, 68') configured to keep the first and second bulges (70, 72) pressed firmly against one another.
